# FASCICULE DE BREVET EUROPEEN

(11) **EP 2 464 542 B1**
(45) Date de publication et mention de la délivrance du brevet: **06.11.2013**
(21) Numéro de dépôt: 10745359.9
(22) Date de dépôt: 28.06.2010
(51) Int. Cl.: B60Q 1/44, B62D 35/00

(54) **BECQUET ARRIERE POUR VEHICULE AUTOMOBILE ET VEHICULE EQUIPE D'UN TEL BECQUET ARRIERE.**
HECKSPOILER EINES KRAFTFAHRZEUGS UND KRAFTFAHRZEUG MIT EINEM SOLCHEN HECKSPOILER
REAR SPOILER FOR A MOTOR VEHICLE AND VEHICLE EQUIPPED WITH SUCH SPOILER

(30) Priorité: 11.08.2009 FR 0955628
(43) Date de publication de la demande: 20.06.2012
(73) Titulaire: Peugeot Citroën Automobiles SA, 78140 Vélizy-Villacoublay (FR)
(72) Inventeur: LE, Jean-Louis, F-92260 Fontenay Aux Roses (FR); GALBRUN, Sébastien, F-94260 Fresnes (FR); MICHEL, Xavier, F-94510 La Queue En Brie (FR)
(74) Mandataire: Fernandez, Francis Lionel
(86) Numéro de dépôt international: PCT/FR2010/051344
(87) Numéro de publication internationale: WO 2011/018566

(56) Documents cités:
- EP-A1- 2 085 623
- EP-A2- 1 630 080
- JP-A- 8 188 183
- JP-A- 2007 118 650
- JP-A- 2008 037 174
- JP-A- 2009 029 241
- JP-U- 3 028 038

## Description

La présente invention concerne un becquet arrière destiné à être fixé dans une zone comprise entre l'arrière du pavillon d'un véhicule automobile et le bord supérieur de la lunette arrière de ce véhicule.

L'invention concerne également un véhicule automobile équipé d'un tel becquet arrière.

Un véhicule automobile équipé d'un becquet arrière a été décrit par exemple dans le document JP 10305787.

Un tel becquet arrière favorise les caractéristiques aérodynamiques et le comportement d'un véhicule automobile sur la route.

Il confère également au véhicule une allure sportive recherchée par certains automobilistes.

Cependant, le becquet arrière ci-dessus est fixé dans une zone où existe souvent un troisième feu stop, de sorte que celui-ci doit être placé ailleurs, dans une zone moins favorable à sa visibilité.

Par ailleurs, le becquet décrit dans le document ci-dessus ne comporte pas de déflecteurs aérodynamiques latéraux, ce qui atténue ses performances.

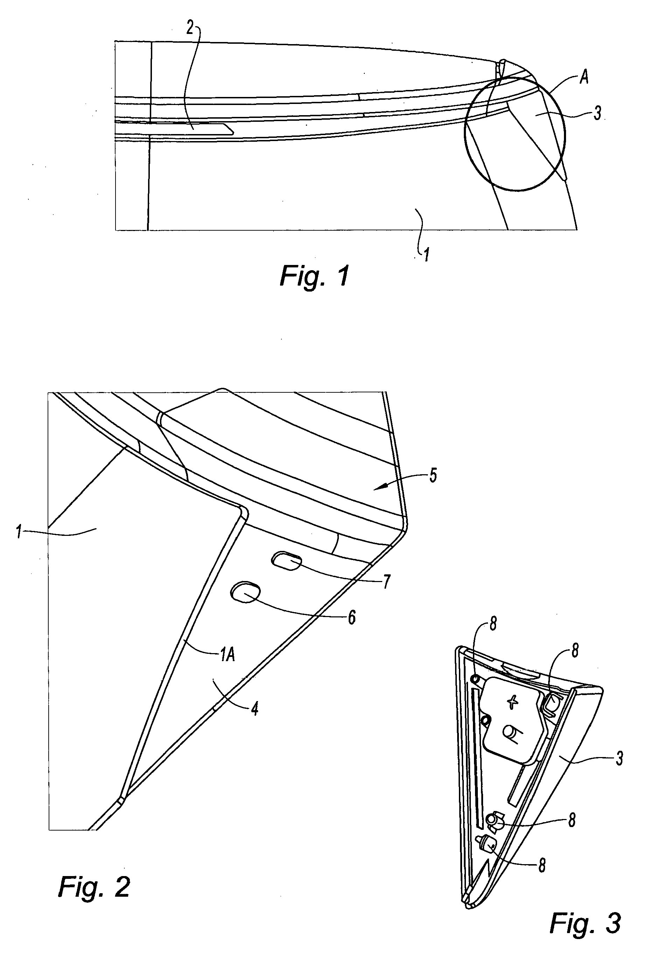

La demanderesse commercialise actuellement un véhicule automobile dont l'arrière est représenté partiellement sur la figure 1.

L'arrière de ce véhicule est dépourvu de becquet arrière, mais comporte dans une zone située au-dessus du milieu de la lunette arrière 1, une lumière 2 prévue pour un troisième feu stop arrière et de chaque côté, dans une zone située près de la partie supérieure du bord latéral de la lunette arrière, un déflecteur aérodynamique 3 fixé à la peau du volet arrière du véhicule.

La figure 2 est une vue agrandie de la zone A de la figure 1, avant la fixation du déflecteur 3 représenté sur la figure 3.

On voit sur la figure 2, les trous 6, 7 réalisés sur la peau 4 du volet arrière 5 pour indexer et fixer le déflecteur 3.

Pour obtenir une position géométrique parfaite du déflecteur 3 par rapport notamment au bord latéral 1 a de la lunette arrière 1, le déflecteur 3 comporte des organes d'indexation 8.

Le document EP 2 085 623 A montre un becquet arrière selon le préambule de la revendication 1.

Le document JP2007-118650 A montre un becquet arrière avec une peau extérieure, une doublure et un troisième feu stop.

Le but de la présente invention est de remédier aux inconvénients du becquet arrière décrit dans l'art antérieur, en créant un becquet arrière qui puisse être facilement monté sur un véhicule tel que celui représenté sur la figure 1.

Ce but est atteint, selon l'invention, grâce à un becquet arrière selon la revendication 1.

Ainsi, le becquet arrière selon l'invention intègre à la fois un troisième feu stop arrière et deux déflecteurs aérodynamiques.

En outre, un tel becquet arrière peut être monté facilement à l'arrière d'un véhicule tel que celui représenté sur la figure 1, le troisième feu stop de ce becquet remplaçant celui qui est directement intégré dans le volet arrière et les deux déflecteurs du becquet se substituant aux deux déflecteurs directement fixés sur le volet arrière.

Le becquet arrière comprend une peau extérieure formant le dessus du becquet, une doublure fixée sous la peau extérieure, une équerre de fixation de la face avant de la partie centrale du becquet, un troisième feu stop fixé à la doublure et une partie de fermeture fixée sous la doublure.

De préférence, l'équerre de fixation est fixée à la doublure et ladite doublure porte sur chacune de ses deux extrémités opposées, une interface destinée à supporter l'un des deux déflecteurs aérodynamiques.

Dans un mode de réalisation avantageux de l'invention, ladite doublure et ladite équerre comportent des trous pour le passage de vis de fixation du becquet au véhicule.

De préférence tout au partie des trous de fixation de la doublure de becquet ou de l'équerre comprennent des inserts à trou fileté coaxiaux, qui sont destinés à recevoir une vis de serrage, chaque insert à trou fileté étant par exemple serti sur une face externe de ladite doublure ou de ladite équerre.

De préférence, des trous pour le passage de vis de fixation sont également prévus sur chacune desdites interfaces de la doublure.

Selon un autre aspect, l'invention concerne également un véhicule automobile comportant un becquet arrière selon l'invention.

De préférence, le becquet arrière est fixé dans la zone comprise entre le bord supérieur de la lunette arrière et le bord supérieur du volet arrière du véhicule et chacun des deux déflecteurs du becquet arrière est fixé dans une zone du volet arrière adjacente à la partie supérieure d'un bord latéral de la lunette arrière.

Dans un mode de réalisation, ladite partie supérieure dudit bord latéral de la lunette arrière forme un angle avec le reste dudit bord latéral.

D'autres particularités et avantages de l'invention apparaîtront encore tout au long de la description ci-après.

Aux dessins annexés, donnés à titre d'exemples, non limitatifs :
- la figure 4 est une vue en perspective montrant la partie arrière d'un véhicule automobile équipé d'un becquet selon l'invention,
- la figure 5 est une vue en perspective du becquet selon l'invention, montant la face de ce becquet destinée à être fixée sur le véhicule,
- la figure 6 est une vue de dessus du becquet,
- la figure 7 est une vue de dessous du becquet,
- la figure 8 est une vue arrière du becquet,
- la figure 9 est une vue en perspective de l'équerre de fixation centrale du becquet,
- la figure 10 est une vue en perspective partielle de la doublure du becquet montrant l'interface de fixation d'un déflecteur aérodynamique,
- la figure 11 est une autre vue en perspective partielle de la doublure du becquet, montrant un déflecteur fixé sur l'interface de la doublure,
- la figure 12 est une autre vue en perspective de la doublure du becquet,
- la figure 13 est une vue en coupe du becquet suivant le plan XIII-XIII de la figure 5.

La figure 1 montre un véhicule équipé d'un becquet arrière 10 fixé dans une zone comprise entre l'arrière du pavillon 11 du véhicule et le bord supérieur de la lunette arrière 12 de ce véhicule.

Conformément à l'invention, le becquet 10 comprend un troisième feu stop 13 qui est intégré dans la partie centrale du becquet et porte sur chacune de ses deux extrémités opposées, un déflecteur aérodynamique 14 fixé près d'un bord latéral 13a, 13b de la lunette arrière 12.

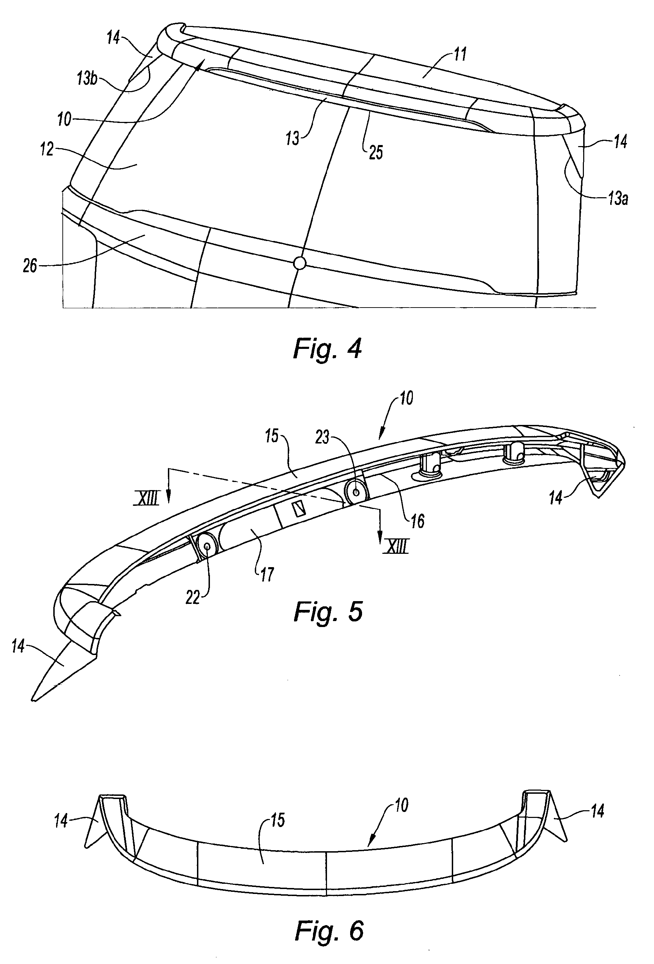

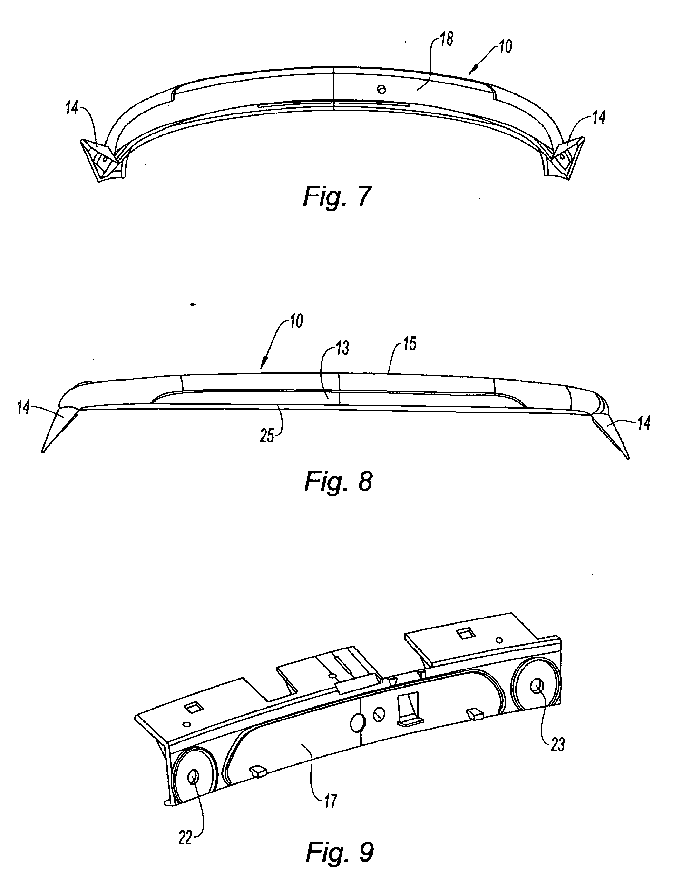

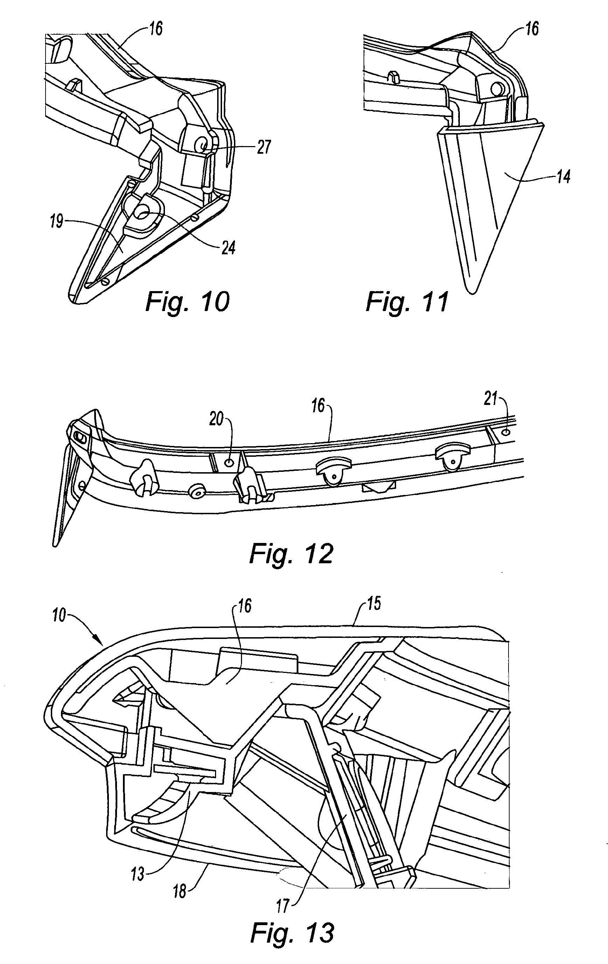

Les figures 5 à 13 montrent que le becquet 10 comprend une peau extérieure 15 formant le dessus du becquet 10, une doublure 16 (voir figures 5 et 10 à 13) fixée, par exemple selon un procédé de collage, sous la peau extérieure 15, une équerre 17 (voir figure 5, 9 et 13) de fixation de la face avant de la partie centrale du becquet 10, un troisième feu stop 13 (voir figures 8 et 13) fixé à la doublure 16 et une partie de fermeture 18 fixée sous la doublure 16 après indexage sur celle-ci.

L'équerre 17 de fixation est fixée à la doublure 16, comme montré sur les figures 5 et 13.

Par ailleurs, les figures 10, 11, 12 montrent que la doublure 16 porte sur chacune de ses deux extrémités opposées une interface 19 destinée à supporter l'un des deux déflecteurs aérodynamiques 14 (voir figure 11).

Les figures 5, 9 et 12 montrent que la doublure 16 et l'équerre 17 comportent des doigts d'indexage 20, 21 et des trous 22, 23, 24, 27 pour le passage de vis de fixation du becquet 10 au véhicule.

Par ailleurs, des trous pour le passage de vis de fixation, tels que le trou 24 (voir figure 10) sont également prévus sur chacune des interfaces 19 de la doublure 16.

Le déflecteur 14 représenté sur la figure 11 est fixé sur l'interface 19 prévu à chaque extrémité de la doublure 16 par encliquetage ou collage.

La peau extérieure 15, la doublure 16, l'équerre de fixation 17, la partie de fermeture 13 et les déflecteurs aérodynamiques 14 peuvent être moulés en matière plastique.

L'ensemble du becquet 10 présente une forme arquée qui épouse le profil de la surface du véhicule sur laquelle le becquet 10 est fixé.

Le bord arrière du becquet 10 présente un profil arrondi sur lequel est réalisée une fenêtre allongée 25 (voir figures 4 et 8) s'étendant de part et d'autre du milieu du becquet 10 à travers laquelle est visible le troisième feu stop 13.

Ce troisième feu stop 13 est constitué par un boîtier qui est intégré à l'intérieur du becquet 10.

L'assemblage des différents constituants du becquet arrière 10 est réalisé comme suit :
- la peau extérieure 15 du becquet est collée avec la doublure 16,
- le troisième feu stop 13 est vissé à la doublure 16,
- les deux déflecteurs 14 sont collés sur les interfaces 19 de la doublure 16,
- l'équerre de fixation centrale 17 est fixée à la doublure 16 et,
- la partie de fermeture 18 est fixée à la doublure 16.

Dans l'exemple représenté sur la figure 4, le becquet arrière 10 est fixé dans la zone comprise entre le bord supérieur de la lunette arrière 12 et le bord supérieur du volet arrière 26 du véhicule.

Chacun des deux déflecteurs 14 du becquet arrière est fixé dans une zone du volet arrière 26 adjacente à la partie supérieure d'un bord latéral 13a, 13b de la lunette arrière 12.

Cette partie supérieure du bord latéral 13a, 13b de la lunette arrière 12 forme un angle avec le reste dudit bord latéral.

Le becquet 10 selon l'invention peut être fixé à l'arrière d'un véhicule dont la version de base est comme dans le cas de la figure 1 dépourvue de becquet arrière, mais comporte à la partie supérieure du volet arrière, une lumière allongée pour recevoir un troisième feu stop 2 et des trous de fixation et d'indexage 6, 7 (voir figure 2) pour fixer chacun des deux déflecteurs aérodynamiques 3 dans une zone du volet arrière adjacente à la partie supérieure d'un bord latéral 1 a de la lunette arrière 1.

Lors de la fixation du becquet arrière 10 sur la partie supérieure du volet arrière d'un tel véhicule de base, l'équerre de fixation centrale 17 du becquet 10 vient s'appliquer sur la lumière 2 prévue pour le troisième feu stop et cette lumière 2 sert de passage pour les fils de connexion électrique du troisième feu stop 13 qui est intégré dans le becquet 10, ainsi que pour le conduit relié à un gicleur intégré au troisième feu stop 13..

Par ailleurs, les trous de fixation 6 prévus sur le volet arrière pour la fixation des déflecteurs 3 du véhicule de base sont utilisés cette fois-ci pour fixer les deux déflecteurs 14 portés par le becquet arrière 10.

Ainsi, les modifications à apporter au véhicule de base pour recevoir le becquet 10 selon l'invention sont réduites et se limitent à la réalisation de quelques trous supplémentaires pour fixer le becquet 10.

De plus, l'utilisation de trous de fixation communs avec ceux prévus sur la version de base du véhicule permet de garantir une fixation géométrique précise et reproductible du becquet en respectant les exigences de jeux et d'affleurements.

## Revendications

1. Becquet arrière (10) destiné à être fixé dans une zone comprise entre l'arrière du pavillon (11) d'un véhicule automobile et le bord supérieur de la lunette arrière (12) de ce véhicule, ledit becquet (10) comprenant un troisième feu stop (13) qui est intégré dans la partie centrale de ce becquet et porte sur chacune de ses deux extrémités opposées, un déflecteur aérodynamique (14) destiné à être fixé près d'un bord latéral (13a, 13b) de la lunette arrière (12), **caractérisé en ce qu'**il comprend une peau extérieure (15) formant le dessus du becquet (10), une doublure (16) fixée sous la peau extérieure (15), une équerre de fixation (17) de la face avant de la partie centrale du becquet (10) et une partie de fermeture (18) fixée sous la doublure (16), le troisième feu stop (13) étant fixé à la doublure (16).

2. Becquet arrière selon la revendication 1, **caractérisé en ce que** l'équerre de fixation (17) est fixée à la doublure (16).

3. Becquet arrière selon l'une des revendications 1 ou 2, **caractérisé en ce que** ladite doublure (16) porte sur chacune de ses deux extrémités opposées, une interface (19) destinée à supporter l'un des deux déflecteurs aérodynamiques (14).

4. Becquet arrière selon l'une des revendications 1 à 3, **caractérisé en ce que** ladite doublure (16) comporte des doigts d'indexage (20, 21) du becquet (10) au véhicule, ladite équerre (17) de fixation et ladite doublure (16) comportent des trous (22, 23, 24, 27) pour le passage de vis de fixation du becquet (10) au véhicule.

5. Becquet arrière selon les revendications 3 et 4, **caractérisé en ce que** des trous (24, 27) pour le passage de vis de fixation sont également prévus sur chacune desdites interfaces (19) de la doublure (16).

6. Véhicule automobile comportant un becquet arrière (10) selon l'une des revendications 1 à 5.

7. Véhicule selon la revendication 6, **caractérisé en ce que** le becquet arrière (10) est fixé dans la zone comprise entre le bord supérieur de la lunette arrière (12) et le bord supérieur du volet arrière du véhicule.

8. Véhicule selon la revendication 7, **caractérisé en ce que** chacun des deux déflecteurs (14) du becquet arrière est fixé dans une zone du volet arrière adjacente à la partie supérieure d'un bord latéral (13a, 13b) de la lunette arrière (12).

9. Véhicule selon la revendication 8, **caractérisé en ce que** ladite partie supérieure dudit bord latéral (13a, 13b) de la lunette arrière (12) forme un angle avec le reste dudit bord latéral.

## Patentansprüche

1. Heckspoiler (10), der dazu bestimmt ist, in einem Bereich befestigt zu werden, der zwischen der Rückseite des Dachs (11) eines Kraftfahrzeugs und dem oberen Rand des Heckfensters (12) dieses Fahrzeugs liegt, wobei der Heckspoiler (10) ein drittes Bremslicht (13) aufweist, das in den zentralen Teil dieses Heckspoilers integriert ist und auf jedem seiner entgegengesetzten Enden einen aerodynamischen Ablenker (14) aufweist, der dazu bestimmt ist, nahe einem seitlichen Rand (13a, 13b) des Heckfensters (12) befestigt zu werden, **dadurch gekennzeichnet, dass** er eine Außenschale (15) aufweist, die die Oberseite des Heckspoilers (10) bildet, eine Auskleidung (16), die unter der Außenschale (15) befestigt ist, einen Befestigungswinkel (17) der Vorderseite des zentralen Teils des Heckspoilers (10), und einen Verschlussteil (18), der unter der Auskleidung (16) befestigt ist, wobei das dritte Bremslicht (13) an der Auskleidung (16) befestigt ist.

2. Heckspoiler nach Anspruch 1, **dadurch gekennzeichnet, dass** der Befestigungswinkel (17) an der Auskleidung (16) befestigt ist.

3. Heckspoiler nach einem der Ansprüche 1 oder 2, **dadurch gekennzeichnet, dass** die Auskleidung (16) auf jedem ihrer zwei entgegengesetzten Enden eine Schnittstelle (19) aufweist, die dazu bestimmt ist, einen der zwei aerodynamischen Ablenker (14) zu tragen.

4. Heckspoiler nach einem der Ansprüche 1 bis 3, **dadurch gekennzeichnet, dass** die Auskleidung (16) Positionierungsfinger (20, 21) des Heckspoilers (10) an dem Fahrzeug aufweist, wobei der Befestigungswinkel (16) und die Auskleidung (16) Bohrungen (22, 23, 24, 27) für das Durchgehen von Schrauben zum Befestigen des Heckspoilers (10) an dem Fahrzeug aufweisen.

5. Heckspoiler nach den Ansprüchen 3 und 4, **dadurch gekennzeichnet, dass** die Bohrungen (24, 27) für das Durchgehen der Befestigungsschrauben auch auf jeder der Schnittstellen (19) der Auskleidung (16) vorgesehen sind.

6. Kraftfahrzeug, das einen Heckspoiler (10) nach einem der Ansprüche 1 bis 5 aufweist.

7. Fahrzeug nach Anspruch 6, **dadurch gekennzeichnet, dass** der Heckspoiler (10) in dem Bereich befestigt ist, der zwischen dem oberen Rand des Heckfensters (12) und dem oberen Rand der Heckklappe des Fahrzeugs liegt.

8. Kraftfahrzeug nach Anspruch 7, **dadurch gekennzeichnet, dass** jeder der zwei Ablenker (14) des Heckspoilers in einem Bereich der Heckklappe neben dem oberen Teil eines seitlichen Rands (13a, 13b) des Heckfensters (12) befestigt ist.

9. Fahrzeug nach Anspruch 8, **dadurch gekennzeichnet, dass** der obere Teil des seitlichen Rands (13a, 13b) des Heckfensters (12) einen Winkel mit dem Rest des seitlichen Rands bildet.

## Claims

1. A rear spoiler (10) intended to be attached in an area comprised between the rear of the roof (11) of a motor vehicle and the upper edge of the rear window (12) of this vehicle, the said spoiler (10) including a third brake light (13) which is integrated in the central part of this spoiler and carries on each of its two opposite ends an aerodynamic deflector (14) intended to be attached close to a side edge (13a, 13b) of the rear window (12), **characterized in that** it includes an exterior skin (15) forming the top of the spoiler (10), a lining (16) attached beneath the exterior skin (15), a fixing bracket (17) of the front face of the central part of the spoiler (10) and a closure part (18) attached beneath the lining (16), the third brake light (13) being attached to the lining (16).

2. The rear spoiler according to Claim 1, **characterized in that** the fixing bracket (17) is attached to the lining (16).

3. The rear spoiler according to one of Claims 1 or 2, **characterized in that** the said lining (16) carries on each of its two opposite ends an interface (19) intended to support one of the two aerodynamic deflectors (14).

4. The rear spoiler according to one of Claims 1 to 3, **characterized in that** the said lining (16) comprises indexing pins (20, 21) of the spoiler (10) to the vehicle, the said fixing bracket (17) and the said lining (16) comprise holes (22, 23, 24, 27) for the passage of fixing screws of the spoiler (10) to the vehicle.

5. The rear spoiler according to Claims 3 and 4, **characterized in that** holes (24,27) for the passage of fixing screws are also provided on each of the said interfaces (19) of the lining (16).

6. A motor vehicle comprising a rear spoiler (10) according to one of Claims 1 to 5.

7. The vehicle according to Claim 6, **characterized in that** the rear spoiler (10) is attached in the area comprised between the upper edge of the rear window (12) and the upper edge of the rear flap of the vehicle.

8. The vehicle according to Claim 7, **characterized in that** each of the two deflectors (14) of the rear spoiler is attached in an area of the rear flap adjacent to the upper part of a side edge (13a, 13b) of the rear window (12).

9. The vehicle according to Claim 8, **characterized in that** the said upper part of the said side edge (13a, 13b) of the rear window (12) forms an angle with the rest of the said side edge.
